# EUROPÄISCHE PATENTSCHRIFT

(11) **EP 3 670 301 B1**
(45) Veröffentlichungstag und Bekanntmachung des Hinweises auf die Patenterteilung: **17.04.2024**
(21) Anmeldenummer: 19210498.2
(22) Anmeldetag: 21.11.2019
(51) Int. Cl.: B62D 15/02

(54) **VERFAHREN ZUM WENIGSTENS TEILAUTOMATISIERTEN STEUERN DES KRAFTFAHRZEUGS WÄHREND EINES EINPARK- ODER AUSPARKVORGANGS, STEUERVORRICHTUNG SOWIE KRAFTFAHRZEUG**
CONTROL DEVICE, MOTOR VEHICLE AND METHOD FOR AT LEAST PARTIALLY AUTOMATIC CONTROL OF THE MOTOR VEHICLE DURING A PARKING PROCESS OR DRIVING OUT OF A PARKING SPACE
PROCÉDÉ DE COMMANDE AU MOINS PARTIELLEMENT AUTOMATISÉE DU VÉHICULE AUTOMOBILE LORS D'UN PROCESSUS DE STATIONNEMENT OU DE SORTIE DE STATIONNEMENT, DISPOSITIF DE COMMANDE, AINSI QUE VÉHICULE AUTOMOBILE

(30) Priorität: 20.12.2018 DE 102018222531
(43) Veröffentlichungstag der Anmeldung: 24.06.2020
(73) Patentinhaber: Volkswagen Aktiengesellschaft, 38440 Wolfsburg (DE)
(72) Erfinder: Günzel, Thorben, 38118 Braunschweig (DE)

(56) Entgegenhaltungen:
- EP-A1- 2 327 574
- EP-A1- 3 219 584
- EP-A1- 3 409 549
- EP-A1- 3 416 016
- DE-A1-102011 080 932
- DE-A1-102012 216 986
- DE-A1-102015 112 311

## Beschreibung

Die Erfindung betrifft ein Verfahren und eine Steuervorrichtung zum wenigstens teilautomatisierten Steuern eines Kraftfahrzeugs während eines Einpark- oder Ausparkvorgangs. Ferner betrifft die Erfindung ein Kraftfahrzeug mit einer derartigen Steuervorrichtung.

Kraftfahrzeuge weisen oftmals Fahrerassistenzsysteme auf, mittels welchen ein Fahrzeugnutzer bei einem Einpark- oder Ausparkvorgang unterstützt wird. Hierbei können derartige Fahrerassistenzsysteme eine Längs- und/oder Querführung des Kraftfahrzeugs übernehmen, um beispielsweise während des Einparkvorgangs das Kraftfahrzeug auf einen Stellplatz, welcher beispielsweise in Form einer Längs- oder Querparklücke vorliegt, zu unterstützen. Hierbei können insbesondere bodennahe Hindernisse, wie zum Beispiel Bodenschwellen, Regenrinnen oder Bordsteinkanten insbesondere die Längsführung des Kraftfahrzeugs erheblich erschweren, sodass ein zeitnahes Berücksichtigen von bodennahen Hindernissen ein darauf abgestimmtes Steuern des Kraftfahrzeugs erleichtert.

In der DE 10 2011 080 932 A1 wird ein Verfahren zur Unterstützung eines Fahrers eines Fahrzeugs bei der Durchführung von selbsttätigen Fahrmanövern in Reaktion auf bodennahe und vom Fahrzeug überfahrbare Objekte offenbart. Die bodennahen Objekte im Umfeld des Fahrzeugs werden direkt, beispielsweise mittels einer Umfeldsensorik, oder indirekt, beispielsweise mittels digitaler Informationen von einem Navigationssystem oder von Cloud-Diensten, identifiziert. Auf Basis von konstruktiven Merkmalen der bodennahen Objekte werden optimale Parameter, wie zum Beispiel eine Geschwindigkeit, eine Trajektorie oder eine Lenkeinstellung, zum Umfahren oder Überfahren der bodennahen Objekte bestimmt, sodass Erschütterungen während der Durchführung von Fahrmanövern minimal sind.

Ferner ist ein Verfahren zum zumindest semi-autonomen Manövrieren eines Kraftfahrzeugs mit Erkennung eines Bordsteinkontakts bereits der DE 10 2015 112 311 A1 als bekannt zu entnehmen. Eine Parklücke wird mittels eines Sensors erkannt und anhand einer aktuellen Position des Kraftfahrzeugs und der erkannten Parklücke wird eine Fahrtrajektorie zum Einparken bestimmt. Beim Manövrieren des Kraftfahrzeugs entlang der Fahrtrajektorie, beispielsweise mittels eines ein Gas- und Bremspedal betätigendes Fahrerassistenzsystems, wird ein Kontakt zumindest eines Rads des Kraftfahrzeugs mit einem Bordstein erkannt, wenn eine Motordrehzahl eine Änderung aufweist. Wenn das zumindest eine Rad auf den Bordstein hinaufrollen soll, wird die Drehzahl des Antriebsmotors erhöht.

Aus den gattungsgemäßen DE 10 2017 111 874 A1 und EP 3 409 549 A1 ist jeweils ein Verfahren zum automatisierten Führen eines Kraftfahrzeugs bekannt. Hierbei wird ein Höhenprofil auf einer von dem Kraftfahrzeug abzufahrenden Trajektorie erfasst und ein Endwert der Trajektorie ermittelt, wobei ein Drehmoment oder eine Beschleunigung in Abhängigkeit von dem Höhenprofil und von dem Endwert der Trajektorie bereitgestellt wird.

Die EP 3 416 016 A1 offenbart ein Verfahren zum Unterstützen eines Manövriervorgangs eines Kraftfahrzeugs in einem Parkhaus, wobei der Manövriervorgang durch zumindest einen Sensor des Kraftfahrzeugs überwacht wird.

In DE 10 2012 216 986 A1 wird ein Verfahren zur Assistenz bei einem Fahrmanöver eines Fahrzeugs offenbart, bei dem eine Trajektorie in Abhängigkeit eines Reibwerts ermittelt wird. Es ist die Aufgabe der Erfindung, eine verbesserte Lösung zum wenigstens teilautomatisierten Steuern eines Kraftfahrzeugs während eines Einpark- oder Ausparkvorgangs bereitzustellen. Diese Aufgabe wird durch die Gegenstände der unabhängigen Patentansprüche gelöst. Vorteilhafte Ausgestaltungen mit zweckmäßigen und nicht-trivialen Weiterbildungen der Erfindung sind in den abhängigen Ansprüchen, der folgenden Beschreibung und den Figuren angegeben.

Beim bereitgestellten Verfahren zum wenigstens teilautomatisierten Steuern eines Kraftfahrzeugs während eines Einpark- oder Ausparkvorgangs wird eine Zielposition für den Einpark- oder Ausparkvorgang ermittelt. Unter dem wenigstens teilautomatisierten Steuern des Kraftfahrzeugs wird insbesondere eine hochautomatisierte, vollautomatisierte oder fahrerlose Durchführung des Einpark- oder Ausparkvorgangs, beispielsweise ab der zweiten SAE Autonomiestufe, verstanden. Die Zielposition kennzeichnet beispielsweise beim Einparkvorgang einen Stellplatz, auf den das Kraftfahrzeug eingeparkt werden soll, beziehungsweise beim Ausparkvorgang einen Übergabeplatz, zu welchem das Kraftfahrzeug bewegt werden soll, nachdem es vom Stellplatz ausgeparkt wurde. Die Zielposition kann beispielsweise mittels einer Sensoreinrichtung, insbesondere des Kraftfahrzeugs, erfasst und/oder über eine Kommunikationsverbindung zwischen dem Kraftfahrzeug und einer fahrzeugfremden Servereinrichtung übermittelt werden. Um eine nähere Fahrzeugumgebung und insbesondere die Zielposition für das Kraftfahrzeug mittels der Sensoreinrichtung erfassen zu können, umfasst die Sensoreinrichtung beispielsweise Ultraschallsensoren, Lasersensoren, Lidarsensoren, Radarsensoren, Infrarotsensoren und/oder optische Sensoren, wie Kameras. Die fahrzeugfremde Servereinrichtung kann beispielsweise einer Parkinfrastruktur, wie einem Parkhaus oder einem Parkplatz, zugeordnet sein. Hierbei weist die Parkinfrastruktur wenigstens den einen Stellplatz für das Kraftfahrzeug auf. Informationen, die von der Sensoreinrichtung erfasst und/oder von der fahrzeugfremden Servereinrichtung übermittelt werden, umfassen beispielsweise einen Abstand einer aktuellen Fahrzeugposition zur ermittelten Zielposition und potenziell befahrbare Flächen zum Bewegen und/oder zum Abstellen des Kraftfahrzeugs. Die Informationen werden einer Recheneinrichtung, insbesondere einer Recheneinrichtung des Kraftfahrzeugs, bereitgestellt und von dieser ausgewertet.

Um die Zielposition ausgehend von einer Startposition des Kraftfahrzeugs zu erreichen, wird eine Trajektorie ermittelt. Die Ermittlung der Trajektorie basiert auf der Auswertung der Informationen der Sensoreinrichtung und/oder der fahrzeugfremden Servereinrichtung zur näheren Fahrzeugumgebung. Die Trajektorie bestimmt eine zum Erreichen der Zielposition erforderliche optimale Fahrroute von der Startposition, das heißt insbesondere der aktuellen Fahrzeugposition, zur ausgewählten Zielposition. Es ist vorgesehen, dass die Trajektorie entlang einer Oberfläche einer Fahrbahn verläuft und unter Berücksichtigung von beispielsweise einem Mindestabstand des Kraftfahrzeugs zu anderen Fahrzeugen und/oder Bodenmarkierungen ermittelt wird. Bevorzugt verläuft die Oberfläche der Fahrbahn eben, das heißt sie weist keine Fahrbahnunebenheiten, beispielsweise bodennahe Hindernisse, auf. Unter Umständen weist die Fahrbahn eine befahrbare Neigung in Form einer Längsneigung, beispielsweise zum Überwinden von Höhendifferenzen, und/oder eine Querneigung, beispielsweise zum Abführen von Oberflächenwasser, auf.

Anhand bereitgestellter Daten werden Fahrbahnunebenheiten zumindest entlang der Trajektorie charakterisiert. Die Daten umfassen beispielsweise Informationen zu geometrischen Formen und deren Abmessungen der jeweiligen Fahrbahnunebenheit. Sie werden mittels der Recheneinrichtung ausgewertet. Falls hierbei wenigstens ein bodennahes Hindernis erkannt wird, wird wenigstens ein Längsregelungsparameter des Kraftfahrzeugs zum Überfahren des wenigstens einen bodennahen Hindernisses ermittelt. Als bodennahes Hindernis werden in diesem Zusammenhang insbesondere Bodenschwellen, Abflussvorrichtungen für Oberflächenwasser, wie beispielsweise Regenrinnen, oder erhöhte Fahrbahnbegrenzungen, wie beispielsweise Bordsteinkanten, verstanden, die vom Kraftfahrzeug entlang der Trajektorie zu überfahren und dementsprechend überfahrbar sind. Bei dem wenigstens einen Längsregelungsparameter kann es sich beispielsweise um eine Fahrzeuggeschwindigkeit oder ein Motormoment handeln. Hierbei erlaubt der wenigstens eine Längsregelungsparameter ein Fahrverhalten des Kraftfahrzeugs auf das wenigstens eine bodennahe Hindernis anzupassen, das heißt beispielsweise die Fahrgeschwindigkeit oder das Motormoment des Kraftfahrzeugs bei Bedarf zu erhöhen oder zu erniedrigen. Alternativ oder zusätzlich kann die Trajektorie in Abhängigkeit von den Fahrbahnunebenheiten und insbesondere dem wenigstens einen bodennahen Hindernis ermittelt werden.

Beim wenigstens teilautomatisierten Steuern des Kraftfahrzeugs während des Einpark- oder Ausparkvorgangs wird das Kraftfahrzeug wenigstens teilautomatisiert bis zum Erreichen der Zielposition entlang der ermittelten Trajektorie bewegt, indem zumindest eine Längsregelung des Kraftfahrzeugs unter Berücksichtigung des wenigstens einen ermittelten Längsregelungsparameters automatisch erfolgt. Mittels der Längsregelung werden Beschleunigungs- beziehungsweise Bremsvorgänge geregelt. Beispielsweise wird der wenigstens eine Längsregelungsparameter des Kraftfahrzeugs zum Befahren der Trajektorie, welcher beispielsweise aus einem vorgegebenen Geschwindigkeitsprofil resultiert, mit dem wenigstens einen Längsregelungsparameter zum Überfahren des wenigstens einen bodennahen Hindernisses mittels der Recheneinrichtung vergleichend gegenübergestellt. Wird eine Abweichung der jeweiligen Längsregelungsparameter erkannt, das heißt die jeweiligen Längsregelungsparameter unterscheiden sich voneinander, dann erfolgt eine Anpassung. Dies ist erforderlich, da unterschiedliche Anforderungen an die Längsregelung beim Befahren der Trajektorie der bevorzugt ebenen Oberfläche und der die Fahrbahnunebenheiten aufweisenden Oberfläche der Fahrbahn. Somit kann aufgrund des bekannten wenigstens einen bodennahen Hindernisses bereits vor dem Erreichen des wenigstens einen bodennahen Hindernisses reagiert werden. Die automatische Längsregelung in Abhängigkeit von dem wenigstens einen Längsregelungsparameter wird von einer Steuervorrichtung, vorzugsweise einer Steuervorrichtung des Kraftfahrzeugs, veranlasst.

Vorteilhaft an dem Verfahren ist, dass mittels der automatisch erfolgenden Längsregelung des Kraftfahrzeugs in Abhängigkeit des wenigstens einen ermittelten Längsregelungsparameters, welcher unter Berücksichtigung des wenigstens einen bodennahen Hindernisses ermittelt wird, eine mit optimaler Fahrgeschwindigkeit durchgeführte Bewegung des Kraftfahrzeugs entlang der Trajektorie ermöglicht wird, auch wenn das wenigstens eine bodennahe Hindernis entlang der Trajektorie angeordnet ist. Die optimale Fahrgeschwindigkeit berücksichtigt beispielsweise das vorgegebene Geschwindigkeitsprofil. Des Weiteren vorteilhaft ist, dass frühzeitig ein auf das wenigstens eine bodennahe Hindernis abgestimmtes Überfahren eingeleitet und durchgeführt werden kann. Das bedeutet beispielsweise, dass ein Fahrzeugnutzer lediglich geringe Erschütterungen beim Überfahren des wenigstens einen bodennahen Hindernisses wahrnimmt und somit ein Fahrkomfort des Fahrzeugnutzers erhöht wird. Auch wird das Kraftfahrzeug, während es entlang der Trajektorie wenigstens teilautomatisiert bewegt wird, nicht abrupt vom wenigstens einen bodennahen Hindernis abgebremst, da im Zuge der automatischen Längsregelung frühzeitig der wenigstens eine ermittelte Längsregelungsparameter eingestellt wird.

Dem Verfahren liegt die Erkenntnis zugrunde, dass beim wenigstens teilautomatisierten Steuern des Kraftfahrzeugs die Längsregelung des Kraftfahrzeugs beim Überfahren des wenigstens einen bodennahen Hindernisses entlang der Trajektorie erschwert wird. Somit erlaubt ein frühzeitiges Erkennen und in dessen Folge ein vorzeitiges Reagieren auf das jeweilige bodennahe Hindernis das vorausschauende Steuern des Kraftfahrzeugs, wobei insbesondere der Fahrkomfort für den im Kraftfahrzeug sitzenden Fahrzeugnutzer während des wenigstens teilautomatisierten Einpark- oder Ausparkvorgangs bestehend bleibt. Des Weiteren können Schäden am Kraftfahrzeug, beispielsweise an einem Dämpfungssystem, vermieden werden, welche aus dem Überfahren des wenigstens einen bodennahen Hindernisses mit zu großer Fahrgeschwindigkeit resultieren können.

Erfindungsgemäß ist vorgesehen, dass der wenigstens eine Längsregelungsparameter eingestellt wird, wenn ein Mindestabstand zwischen dem wenigstens einen bodennahen Hindernis und dem Kraftfahrzeug beim Befahren der Trajektorie mit dem Kraftfahrzeug unterschritten wird. Um rechtzeitig eine Anpassung vornehmen zu können, wird die aktuelle Fahrzeugposition, beispielsweise die jeweilige Startposition zu Beginn des Einpark- oder Ausparkvorgangs, in Relation zu einer Position des wenigstens einen bodennahen Hindernisses ermittelt, welches auf der Trajektorie liegt. Hierbei wird beispielsweise ein Mittelpunkt des wenigstens einen bodennahen Hindernisses oder ein dem Fahrzeug nächstgelegener Punkt des wenigstens einen bodennahen Hindernisses der aktuellen Fahrzeugposition gegenübergestellt. Vorteilhaft ist, dass aufgrund des Mindestabstands mögliche Anpassungen des Fahrverhaltens, insbesondere das Einstellen des wenigstens einen Längsregelungsparameters, noch vor dem Erreichen des wenigstens einen bodennahen Hindernisses erfolgen kann.

Die Erfindung sieht vor, dass zudem noch eine Querregelung des Kraftfahrzeugs bis zum Erreichen der Zielposition automatisch erfolgt. Das heißt, dass auch eine Lenkung des Kraftfahrzeugs im Zuge des wenigstens teilautomatisierten Bewegens des Kraftfahrzeugs durchgeführt wird. Hierbei wird das Kraftfahrzeug durch eine Änderung eines Lenkwinkels entlang der Trajektorie bewegt, wobei die Änderung insbesondere in Abhängigkeit von der Längsregelung erfolgt. Vorteilhaft ist, dass durch die automatische Längs- und Querregelung des Kraftfahrzeugs das Kraftfahrzeug besonders komfortabel und sicher bewegt wird.

Eine vorteilhafte Ausführungsform der Erfindung sieht vor, dass ein Geschwindigkeitsprofil vorgegeben wird, gemäß welchem das Kraftfahrzeug die ermittelte Trajektorie befahren soll, wobei das wenigstens teilautomatisierte Bewegen entlang der Trajektorie zumindest außerhalb vom bodennahen Hindernis unter Einhaltung des Geschwindigkeitsprofils erfolgt. Das bedeutet beispielsweise, dass bei einer beliebigen Position des Kraftfahrzeugs beim Bewegen entlang der Trajektorie der wenigstens eine Längsregelungsparameter bekannt ist, mittels welchem das Kraftfahrzeug derart gesteuert werden kann, sodass eine jeweilige Fahrgeschwindigkeit dem Geschwindigkeitsprofil entlang der Trajektorie entspricht. Beispielsweise kann die Fahrgeschwindigkeit beim Bewegen des Kraftfahrzeugs von der Startposition ausgehend langsam ansteigenden, dann über einen längeren Zeitraum konstant sein und abschließend, vor dem Erreichen der Zielposition, langsam sinken, bis das Kraftfahrzeug stillsteht. Vorteilhaft ist, dass der Fahrzeugnutzer einen dem Geschwindigkeitsprofil entsprechenden Verlauf der Fahrgeschwindigkeit als besonders komfortabel empfindet, weil auf eine starke positive oder negative Fahrbeschleunigung verzichtet wird.

Gemäß einer weiteren vorteilhaften Ausführungsform der Erfindung wird das Kraftfahrzeug von der Startposition zur Zielposition bewegt und auf einen Stellplatz an der Zielposition eingeparkt, wenn der Einparkvorgang durchgeführt wird. Beim Durchführen des Ausparkvorgangs wird das Kraftfahrzeug vom Stellplatz ausgeparkt und von der Startposition am Stellplatz zu der von der Startposition unterschiedlichen Zielposition bewegt. Das heißt, der Stellplatz umfasst in Abhängigkeit vom Einpark- oder Ausparkvorgang entweder die Zielposition oder die Startposition. Die vom Stellplatz unterschiedliche Startposition beim Einparkvorgang beziehungsweise die vom Stellplatz abweichende Zielposition beim Ausparkvorgang umfasst beispielsweise einen Übergabeplatz, an welchem das Kraftfahrzeug den Einparkvorgang beginnt beziehungsweise den Ausparkvorgang beendet. Vorteilhaft ist, dass anhand des Stellplatzes somit der Einpark- oder Ausparkvorgang eindeutig identifizierbar ist und dementsprechend gesteuert werden kann.

Eine weitere Ausführungsform der Erfindung sieht vor, dass vor dem Ermitteln der Trajektorie für die Startposition und/oder die Zielposition eine jeweilige Parkinfrastrukturebene einer Parkinfrastruktur ermittelt wird, falls die Startposition und/oder die Zielposition innerhalb der Parkinfrastruktur angeordnet ist. Hierbei umfasst die Parkinfrastruktur beispielsweise ein mehrgeschossiges Parkhaus, innerhalb dessen wenigstens der Stellplatz für das Kraftfahrzeug angeordnet ist. Wird das Kraftfahrzeug beispielsweise von einem Einfahrtsbereich des Parkhauses, welcher auf einer ebenerdig zur Fahrbahn angeordneten ersten Parkinfrastrukturebene angeordnet ist, zum Stellplatz einer von der ersten Parkinfrastrukturebene unterschiedlichen zweiten Parkinfrastrukturebene wenigstens teilautomatisiert gesteuert, dann befinden sich die Startposition und die Zielposition auf voneinander unterschiedlichen Parkinfrastrukturebenen. Um von der Parkinfrastrukturebene der Startposition zur Parkinfrastrukturebene der Zielposition zu gelangen, muss beispielsweise ein Höhenunterschied zwischen den jeweiligen Parkinfrastrukturebenen während des Einpark- und zu einem späteren Zeitpunkt durchgeführten Ausparkvorgangs überwunden werden. Jene Daten, welche bauliche Gegebenheiten der Parkinfrastruktur, insbesondere Parkinfrastrukturebenen und Verbindungen zwischen den jeweiligen Parkinfrastrukturebenen, umfassen, können beispielsweise von der der Parkinfrastruktur zugeordneten fahrzeugfremden Servereinrichtung bereitgestellt werden. Vorteilhaft ist, dass dieser Höhenunterschied beim Ermitteln der Trajektorie und der entlang der Trajektorie angeordneten Fahrbahnunebenheiten berücksichtigt und beim wenigstens teilautomatisierten Bewegen des Kraftfahrzeugs überwunden werden kann.

Gemäß einer weiteren vorteilhaften Ausführungsform der Erfindung handelt es sich bei dem wenigstens einen Längsregelungsparameter um eine Motorleistung oder ein Motormoment oder eine Motordrehzahl oder eine Fahrgeschwindigkeit oder eine Fahrzeugbeschleunigung. Hierbei kann der wenigstens eine Längsregelungsparameter die Fahrgeschwindigkeit des Kraftfahrzeugs beeinflussen. Soll das Kraftfahrzeug mit konstanter Fahrgeschwindigkeit entlang der Trajektorie bewegt werden, wobei sich das wenigstens eine bodennahe Hindernis entlang der Trajektorie befindet, dann kann beispielsweise mittels Anpassung des Motormoments die Fahrgeschwindigkeit des Kraftfahrzeugs konstant gehalten werden. Ist zum Überwinden einer Steigung des wenigstens einen bodennahen Hindernisses eine Erhöhung des Motormoments notwendig, erlaubt eine frühzeitige Anhebung des Motormoments ein Beibehalten der Fahrgeschwindigkeit. Vorteilhaft ist, dass unterschiedliche Längsregelungsparameter die Fahrgeschwindigkeit des Kraftfahrzeugs beeinflussen und daher in Abhängigkeit von einer jeweiligen Situation verändert werden können.

Eine weitere vorteilhafte Ausführungsform der Erfindung sieht vor, dass vor einem Erreichen des wenigstens einen bodennahen Hindernisses der wenigstens eine Längsregelungsparameter eingestellt und nach dem Überfahren des wenigstens einen bodennahen Hindernisses eine Einstellung des wenigstens einen Längsparameters zurückgesetzt wird. Handelt es sich bei dem wenigstens einen Längsparameter beispielsweise um die Fahrgeschwindigkeit, dann wird jene Fahrgeschwindigkeit, die zum Befahren der Trajektorie unter Berücksichtigung des Geschwindigkeitsprofils ermittelt und zum Überfahren des wenigstens einen bodennahen Hindernisses insbesondere erhöht wurde, nach dem Überfahren des wenigstens einen bodennahen Hindernisses wieder eingestellt. Das bedeutet, dass eine kurzzeitige Erhöhung beziehungsweise Erniedrigung der Fahrgeschwindigkeit umgekehrt wird, sobald das Überfahren des wenigstens einen bodennahen Hindernisses abgeschlossen wurde. Sowohl die kurzzeitige Erhöhung beziehungsweise Erniedrigung als auch ein Umkehrprozess werden jeweils von der Steuervorrichtung veranlasst. Vorteilhaft ist, dass mittels des Geschwindigkeitsprofils ein besonders auf die Trajektorie abgestimmtes Fahrverhalten umsetzbar ist und das Kraftfahrzeug effizient beim Befahren der Trajektorie betrieben werden kann.

Gemäß der Erfindung wird zumindest ein das bodennahe Hindernis charakterisierender Parameter bereitgestellt und der wenigstens eine Längsregelungsparameter unter Berücksichtigung dieses charakteristischen Parameters ermittelt. Der wenigstens eine charakteristische Parameter kann beispielsweise eine Höhenangabe des wenigstens einen bodennahen Hindernisses relativ zur Oberfläche der Fahrbahn und eine daraus resultierende Steigung sein, welche in eine Berechnung des wenigstens einen Längsregelungsparameters, beispielsweise einer erforderlichen Fahrgeschwindigkeit, einbezogen wird. Vorteilhaft ist, dass die Längsregelung anhand aktueller Informationen zu Fahrbahnunebenheiten, das heißt basierend auf dem zumindest einen charakteristischen Parameter, im Vorfeld angepasst werden kann. Eine weitere vorteilhafte Ausführungsform der Erfindung sieht vor, dass der zumindest eine das bodennahe Hindernis charakterisierende Parameter zumindest eine der folgenden Informationen des wenigstens einen bodennahen Hindernisses umfasst: eine geometrische Form; mindestens ein geometrisches Maß; eine Oberflächenbeschaffenheit; Erfindungsgemäß umfasst der charakterisierende Parameter eine Ausrichtung in Relation zur Trajektorie.

Aufgrund der geometrischen Form des wenigstens einen bodennahen Hindernisses wird beispielsweise ersichtlich, um welche Art von bodennahen Hindernis es sich handelt - beispielsweise eine scharfe Bordsteinkante oder eine langsam ansteigende Bodenschwelle, wobei die zum Überfahren der Bordsteinkante erforderliche Fahrgeschwindigkeit von jener Fahrgeschwindigkeit abweicht, die zum Überfahren der Bodenschwelle notwendig ist. Das wenigstens eine geometrische Maß des wenigstens einen bodennahen Hindernisses charakterisiert hierbei eine Ausprägung der geometrischen Form des wenigstens einen bodennahen Hindernisses. Das bedeutet beispielsweise, dass bei zwei Bodenschwellen gleicher Grundfläche, wobei die Grundfläche in der Oberfläche der Fahrbahn angeordnet ist, je nach Normalabstand eines Scheitelpunkts zur Oberfläche unterschiedliche Anforderungen an den jeweiligen wenigstens einen Längsregelungsparameter aufgrund einer relativen Höhenangabe und einer daraus resultierenden Steigung der jeweiligen Bodenschwelle stellen. Das heißt, für das Überfahren der steileren und höheren Bodenschwelle ist die Fahrgeschwindigkeit höher als beim Überfahren der weniger steilen und niedrigeren Bodenschwelle.

Die Oberflächenbeschaffenheit beschreibt insbesondere eine Topografie, das heißt physikalische aber auch chemische Eigenschaften von einer zu überfahrenden Oberfläche des wenigstens einen bodennahen Hindernisses. Sie wird beispielsweise mittels mechanischen und/oder optischen Messverfahren ermittelt und in entsprechenden Datenbanken hinterlegt. Anhand von Kennwerten der Oberflächenbeschaffenheit, beispielsweise Oberflächenrauheit und Oberflächengestalt, kann auf den Fahrwiderstand der Oberfläche des wenigstens einen bodennahen Hindernisses und in weiterer Folge auf den erforderlichen wenigstens einen Längsparameter rückgeschlossen werden. Des Weiteren kann der Einfluss der Oberflächenbeschaffenheit auf den Fahrkomfort, insbesondere auf Erschütterungen, Vibrationen und Geräusche, in der Längsregelung berücksichtigt werden.

Unter Ausrichtung wird insbesondere bei länglich ausgebildeten bodennahen Hindernissen eine Beziehung zwischen der Trajektorie und einer Achse, beispielsweise einer Längsachse, des wenigstens einen bodennahen Hindernisses verstanden. Länglich ausgebildete bodennahe Hindernisse sind erfindungsgemäß längliche Bodenschwellen, deren Längserstreckung im Verhältnis zu einer normal auf die Längsachse ausgerichteten Quererstreckung wesentlich größer ist. Das Überfahren der länglichen Bodenschwelle könnte (hier nicht beansprucht) beispielsweise derart erfolgen, dass die Trajektorie normal zur Längsachse entlang einer Querachse ausgerichtet ist. Hierbei wird ein minimaler Fahrweg über die längliche Bodenschwelle gewählt. Dieser Fahrweg zeichnet sich durch die größtmögliche Steigung und rasches Erreichen einer maximalen Erhöhung der Bodenschwelle aus. Erfindungsgemäß wird jedoch die längliche Bodenschwelle schräg gequert. Das bedeutet, dass die Trajektorie nicht normal zur Längsachse sondern beispielsweise in einem Winkel von 45° angeordnet ist. Der Fahrweg über die längliche Bodenschwelle ist länger als jener bei beispielsweise 90°, allerdings ist die Steigung geringer. Verläuft die Trajektorie hingegen entlang der Längsachse, ist der Fahrweg über das Hindernis größtmöglich. Zumindest ein Rad des Kraftfahrzeugs befindet sich während des Überfahrens auf der Bodenschwelle und kann in einer (geringen) Schräglage des Kraftfahrzeugs resultieren. Des Weiteren kann auch die Ausrichtung bei beispielsweise kegelsegmentartig erhabenen bodennahen Hindernissen Auswirkungen auf das erforderliche Motormoment haben. Je nachdem, ob das kegelsegmentartige Hindernis bei der maximalen Erhöhung oder versetzt auf einer Mantelfläche des Hindernisses gequert wird, ändert sich der Fahrweg über das jeweilige Hindernis und die zu überwindende Steigung.

Vorteilhaft ist, dass insbesondere aufgrund hinterlegter Daten zum jeweiligen bodennahen Hindernis der erforderliche wenigstens eine Längsregelungsparameter gut auf das jeweilige wenigstens eine bodennahe Hindernis abgestimmt und bereits im Vorfeld angepasst werden kann. Der Weiteren kann beispielsweise der Fahrweg, welcher zum Überfahren des wenigstens einen bodennahen Hindernisses erforderlich ist, optimiert werden und aus dem wenigstens einen Parameter resultierende Informationen, wie die Steigung, die Ausprägung, die Oberfläche oder die Ausrichtung, des wenigstens einen bodennahen Hindernisses in die Ermittlung des wenigstens einen Längsregelungsparameters einfließen.

Einer weiteren vorteilhaften Ausführungsform der Erfindung zufolge werden jene die Fahrbahnunebenheiten charakterisierenden Daten von zumindest einer Datenquelle bereitgestellt. Die Datenquelle ist zumindest eine mittels einer Kommunikationsverbindung mit dem Kraftfahrzeug verbundene fahrzeugfremde Servereinrichtung und/oder ein Navigationssystem des Kraftfahrzeugs und/oder die fahrzeugseitige Sensoreinrichtung. Bei der zumindest einen fahrzeugfremden Servereinrichtung handelt es sich beispielsweise um eine öffentliche oder nicht-öffentliche Rechnerwolke, einen sogenannten Cloud-Dienst. Hierbei wird das Kraftfahrzeug mit der zumindest einen fahrzeugfremden Servereinrichtung vor dem geplanten Einparken- oder Ausparkvorgang automatisch mittels der Kommunikationsverbindung verbunden. Das bedeutet, dass ein Austausch von Daten, insbesondere bezüglich Fahrbahnunebenheiten, zwischen der zumindest einen fahrzeugfremden Servereinrichtung und dem Kraftfahrzeug, insbesondere der Recheneinrichtung, mittels der Kommunikationsverbindung möglich ist. Hierfür wird eine Kommunikationseinrichtung des Kraftfahrzeugs über die Kommunikationsverbindung mit einer Kommunikationseinrichtung der zumindest einen fahrzeugfremden Servereinrichtung verbunden. Das Navigationssystem kann beispielsweise im Kraftfahrzeug verbaut oder einem mobilen Endgerät des Fahrzeugnutzers, beispielsweise einem Mobiltelefon, zugeordnet sein. Bei der fahrzeugseitigen Sensoreinrichtung handelt es sich insbesondere um Sensoren, welche vorzugsweise eine Fahrzeugumgebung in einem Nahbereich des Kraftfahrzeugs, das heißt vor und/oder hinter dem Kraftfahrzeug, erfassen.

Sämtliche Datenquellen stellen sogenannte virtuelle Karten- oder Geoinformationen in jeweiligen Datenbanken bereit, welche insbesondere für das Überfahren des wenigstens einen bodennahen Hindernisses erforderliche Informationen erhalten. Diese Datenbanken können beispielsweise auch spezifische Informationen zu Sonderzielen, sogenannten Points of Interest (POI), enthalten. Diese mittels der Kommunikationseinrichtung des Kraftfahrzeugs empfangenen Daten werden beispielsweise von der Recheneinrichtung ausgewertet. Vorteilhaft ist, dass anhand dieser Daten die Längsregelung des Kraftfahrzeugs beim Manövrieren des Fahrzeugs entlang der Trajektorie angepasst werden kann. Mögliche Probleme bei der automatischen Längsregelung, beispielsweise eine unzulässige nachträgliche Erhöhung der Fahrgeschwindigkeit, können somit vermieden werden. Des Weiteren vorteilhaft ist, dass hierbei gegebenenfalls mehrere unterschiedliche Datenquellen miteinander kombinierbar sind und somit eine möglichst genaue Detektion des wenigstens einen bodennahen Hindernisses erfolgen kann.

Einer weiteren vorteilhaften Ausführungsform der Erfindung zufolge ist die zumindest eine fahrzeugfremde Servereinrichtung Bestandteil einer Parkinfrastruktur. Das bedeutet, dass die beispielsweise als Parkplatz oder Parkhaus ausgeführte Parkinfrastruktur die Servereinrichtung umfasst. Die Servereinrichtung kann insbesondere Daten bereitstellen, welche die innerhalb der Parkinfrastruktur angeordneten Fahrbahnunebenheiten charakterisieren. Vorteilhaft ist, dass insbesondere die für das Überfahren des wenigstens einen bodennahen Hindernisses erforderlichen Informationen über die direkte Kommunikationsverbindung von der fahrzeugfremden Servereinrichtung dem Kraftfahrzeug bereitgestellt werden können.

Gemäß einer weiteren vorteilhaften Ausführungsform der Erfindung ist es vorgesehen, dass das Kraftfahrzeug auf Basis von zumindest einer der folgenden Ortsinformationen lokalisiert wird: digitale Kartendaten und/oder Sensordaten des Kraftfahrzeugs und/oder einer Zieleingabe eines Fahrzeugnutzers. Die Lokalisierung umfasst insbesondere eine Bestimmung der aktuellen Fahrzeugposition und einer Ausrichtung des Kraftfahrzeugs innerhalb der Fahrzeugumgebung. Die digitalen Kartendaten können beispielsweise aus Datenbanken der wenigstens einen fahrzeugfremden Servereinrichtung oder dem Navigationssystem stammen. Sensordaten des Kraftfahrzeugs umfassen beispielsweise Werte aus odometrischen Messungen oder Messungen von Umfeldsensoren. Diese Werte werden insbesondere von Winkelsensoren wie Lenkwinkelsensoren für eine elektronische Stabilitätskontrolle (ESP), Ultraschallsensoren wie Abstandssensoren oder Drehratensensoren wie Giersensoren des ESPs oder eines Antiblockiersystems (ABS) erfasst und können mit Ortsinformationen eines globalen Navigationssatellitensystems, beispielsweise GPS, GLONASS, Galileo oder Beidou kombiniert werden. Hierfür werden die Ortsinformationen des globalen Navigationssatellitensystems mittels einer fahrzeugseitigen Empfangseinrichtung empfangen. Die Zieleingabe des Fahrzeugnutzers kann beispielsweise durch eine aktive Eingabe auf einer Benutzeroberfläche des Navigationssystems erfolgen. Des Weiteren ist denkbar, dass weitere Ortsinformationen des Fahrzeugnutzers, wie Kalendereinträge, zur Lokalisierung herangezogen werden. Vorteilhaft ist, dass mittels der Lokalisierung die aktuelle Fahrzeugposition und die Ausrichtung des Kraftfahrzeugs ermittelt werden können. Basierend auf diesen kann beispielsweise die Trajektorie oder aber auch der Mindestabstand zum wenigstens einen bodennahen Hindernis ermittelt werden. Vorteilhaft ist, dass die Lokalisierung auch eine zumindest teilautomatisierte Steuerung des Kraftfahrzeugs innerhalb der Fahrzeugumgebung erlaubt. Hierbei können insbesondere geografische Besonderheiten, beispielsweise nicht überfahrbare Objekte, räumliche Begrenzungen, die Neigung der Fahrbahn oder Infrastrukturbestandteile der Fahrzeugumgebung mit in die Ermittlung der Trajektorie und in weiterer Folge in die Ermittlung des Geschwindigkeitsprofils und des wenigstens einen Längsparameters der Fahrgeschwindigkeit einfließen.

Die im Zusammenhang mit dem erfindungsgemäßen Verfahren vorgestellten bevorzugten Ausgestaltungen und deren Vorteile gelten entsprechend, soweit anwendbar, für eine erfindungsgemäße Steuervorrichtung sowie ein erfindungsgemäßes Kraftfahrzeug mit einer derartigen Steuervorrichtung, wobei die Steuervorrichtung und das Kraftfahrzeug Mittel zur Durchführung der Verfahrensschritte umfassen.

Im Folgenden ist ein Ausführungsbeispiel der Erfindung beschrieben. Hierzu zeigt:
- Fig. 1: eine schematische Darstellung eines Kraftfahrzeugs, während eines wenigstens teilautomatisierten Einparkvorgangs auf einen Stellplatz einer Parkinfrastruktur;
- Fig. 2: in schematischer Darstellung ein erster Aktionsflussgraph für ein Verfahren zum wenigstens teilautomatisierten Einparkvorgang auf den Stellplatz der Parkinfrastruktur gemäß einer ersten Ausführungsform; und
- Fig. 3: in schematischer Darstellung zweiter erster Aktionsflussgraph für ein Verfahren zum wenigstens teilautomatisierten Einparkvorgang auf den Stellplatz der Parkinfrastruktur gemäß einer zweiten Ausführungsform.

Bei dem im Folgenden erläuterten Ausführungsbeispielen handelt es sich um bevorzugte Ausführungsformen der Erfindung. Bei den Ausführungsbeispielen stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

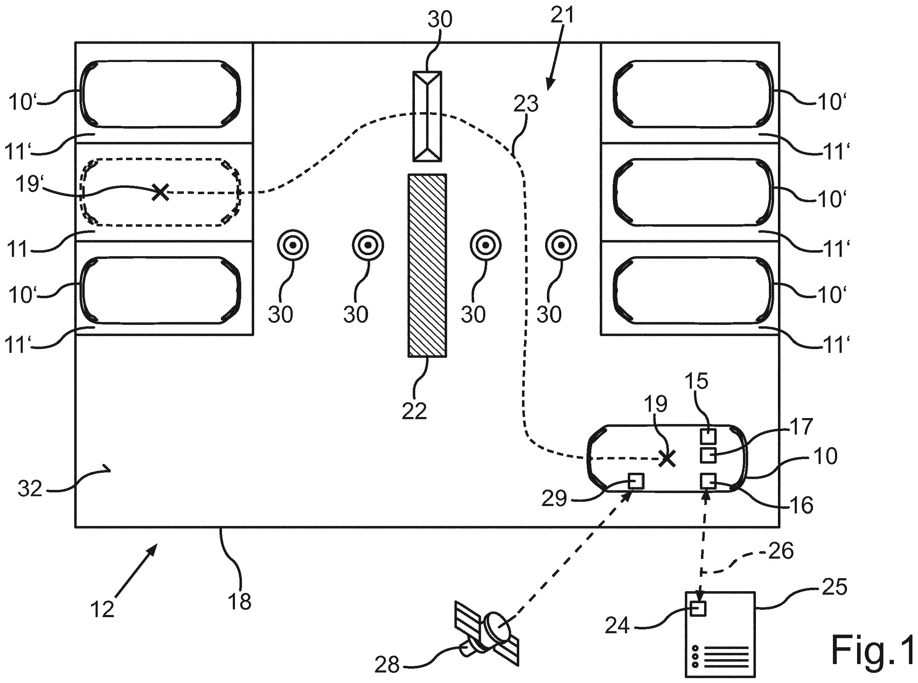

In Fig. 1 ist ein Kraftfahrzeug 10 skizziert, das auf einen Stellplatz 11 wenigstens teilautomatisiert eingeparkt wird. Vorliegend ist der Stellplatz 11 in einem Parkhaus 12 auf einer Parkhausebene 32 angeordnet. Unter dem Parkhaus 12 ist im Allgemeinen eine Parkinfrastruktur zu verstehen, welche beispielsweise auch ein nicht überdachter Parkplatz oder ein Parkstreifen sein kann. Bei mehrgeschossigen Parkhäusern 12, welche mehrere Parkhausebenen 32 aufweisen, wird unter der Parkhausebene 32 auch eine Parkinfrastrukturebene verstanden.

Das Kraftfahrzeug 10 umfasst fahrzeugseitig ein Navigationssystem 13, eine Sensoreinrichtung 14, eine Recheneinrichtung 15, eine Kommunikationseinrichtung 16 und eine Steuervorrichtung 17. Alternativ kann das Kraftfahrzeug 10 lediglich eine Schnittstelle für ein fahrzeugfremdes Navigationssystem aufweisen, sodass beispielsweise auf das Navigationssystem eines mobilen Endgerätes, beispielsweise eines Mobiltelefons eines Fahrzeugnutzers, zugegriffen werden kann.

Die fahrzeugseitige Sensoreinrichtung 14 erfasst mittels diverser Sensoren, wie beispielsweise Kameras, Ultraschallsensoren und Lasersensoren, eine nähere Fahrzeugumgebung 18. Von der Sensoreinrichtung 14 erfasste Informationen zur näheren Fahrzeugumgebung 18 umfassen insbesondere freie Stellplätze 11 und mit anderen Fahrzeugen 10' belegte Stellplätze 11`, eine aktuelle Fahrzeugposition, insbesondere eine Startposition 19, und eine Zielposition 19`, potenziell befahrbare Flächen 21, wie Verbindungswege zwischen den Stellplätzen 11, 11', oder nicht überfahrbare Hindernisse 22, wie Begrenzungsmauern. Diese Informationen werden der Recheneinrichtung 15 zugeführt, welche den Stellplatz 11 und in weiterer Folge eine optimale Fahrroute in Form einer Trajektorie 23 von der Startposition 19 zur Zielposition 19` am Stellplatz 11 ermittelt und ein Geschwindigkeitsprofil 20 zum Befahren der Trajektorie 23 vorgibt. Die fahrzeugseitige Kommunikationseinrichtung 16 kann mit einer fahrzeugfremden Kommunikationseinrichtung 24 einer fahrzeugfremden Servereinrichtung 25 eine Kommunikationsverbindung 26 für einen Austausch, das heißt ein Senden und ein Empfangen, von Daten 27 aufbauen. Des Weiteren können die Daten 27 von einem globalen Navigationssatellitensystem 28, wie einem GPS, von einer fahrzeugseitigen Empfangseinrichtung 29 empfangen werden. Die Daten 27, welche des Weiteren auch vom Navigationssystem 13 stammen können, enthalten hierbei charakteristische Informationen zu Fahrbahnunebenheiten, insbesondere zu überfahrbaren bodennahen Hindernissen 30, welche sich in der näheren Fahrzeugumgebung 18 und im Speziellen entlang der Trajektorie 23 befinden.

Die Daten 27 werden in der Recheneinrichtung 15 ausgewertet und falls wenigstens ein bodennahes Hindernis 30 erkannt wird, wird wenigstens ein Längsparameter, insbesondere eine erforderliche Fahrgeschwindigkeit 31 oder aber auch eine Motorleistung, ein Motormoment, eine Motordrehzahl oder eine Fahrzeugbeschleunigung zum Überfahren des wenigstens einen bodennahen Hindernisses 30 ermittelt. Als bodennahe und überfahrbare Hindernisse 30 werden in diesem Zusammenhang insbesondere Bodenschwellen, Abflussvorrichtungen für Oberflächenwasser wie beispielsweise Regenrinnen oder erhöhte Fahrbahnbegrenzungen wie Bordsteinkanten verstanden. Die erforderliche Fahrgeschwindigkeit 31 wird unter Berücksichtigung wenigstens eines charakteristischen Parameters des wenigstens einen bodennahen Hindernisses 30, wie einer Ausrichtung in Relation zur Trajektorie 23, einer geometrischen Form und mindestens eines geometrischen Maßes und einer Oberflächenbeschaffenheit des wenigstens einen bodennahen Hindernisses 30 ermittelt.

Anhand der Steuervorrichtung 17 erfolgt eine zumindest automatische Längsregelung des Kraftahrzeugs 10, während eines wenigstens teilautomatisierten Einparkvorgangs des Kraftfahrzeugs 10 auf den Stellplatz 11. Zudem kann auch noch eine Querregelung des Kraftfahrzeugs 10 erfolgen. Vor dem Erreichen des wenigstens einen bodennahen Hindernisses 30, das heißt wenn ein Mindestabstand zwischen dem Kraftfahrzeug 10 und dem wenigstens einen bodennahen Hindernis 30 unterschritten wird, wird mittels der Steuervorrichtung 17 die erforderliche Fahrgeschwindigkeit 31 eingestellt. Das Einstellen der erforderlichen Fahrgeschwindigkeit 31 erfolgt beispielsweise in Abhängigkeit von einer Form des wenigstens einen bodennahen Hindernisses 30 und des vorgegebenen Geschwindigkeitsprofils 20.

Weichen das vorgegebene Geschwindigkeitsprofil 20 und die erforderliche Fahrgeschwindigkeit 31 voneinander ab, dann kann gegebenenfalls eine Anpassung erfolgen, wenn es das wenigstens eine bodennahe Hindernis 30 erfordert. Wird eine Erhebung erkannt, wird die erforderliche Fahrgeschwindigkeit 31 eingestellt, um einen Fahrwiderstand zu überwinden und ohne Abbremsen das wenigstens eine bodennahe Hindernis 30 überwinden zu können beziehungsweise einen Stillstand des Kraftfahrzeugs 10 vermeiden zu können. Wird hingegen eine Senke erkannt, wird die erforderliche Fahrgeschwindigkeit 31 eingestellt, um möglichst sanft das wenigstens eine bodennahe Hindernis 30 überfahren zu können.

Beim wenigstens teilautomatisierten Einparkvorgang des Kraftfahrzeugs 10 auf den Stellplatz 11 des Parkhauses 12 in Fig. 1 befindet sich das Kraftfahrzeug 10 auf der Parkhausebene 32, auf welcher vorliegend in zwei Reihen jeweils mehrere Stellplätze 11, 11' nebeneinander angeordnet sind. Anhand der fahrzeugseitigen Sensoreinrichtung 14 werden die mit Fahrzeugen 10' belegten Stellplätze 11' und die unbelegten Stellplätze 11 identifiziert und mittels der Recheneinrichtung 15 jener Stellplatz 11 ermittelt, auf welchem das Kraftfahrzeug 10 geparkt werden soll. Die Trajektorie 23 wird von der als Startposition 19 identifizierten aktuellen Fahrzeugposition entlang der befahrbaren Fläche 21 zur Zielposition 19` am Stellplatz 11 ermittelt. Des Weiteren wird das Geschwindigkeitsprofil 20 zum Befahren der Trajektorie 23 vorgegeben. Um auf eventuelle Fahrbahnunebenheiten entlang der Trajektorie 23 reagieren zu können, werden bereitgestellte Daten 27 von der Recheneinrichtung 15 ausgewertet.

In Fig. 1 werden mehrere, räumlich voneinander getrennte bodennahe Hindernisse 30, zwei kegelsegmentartige erhabene Bodenschwellen und eine vertiefte Abflussrinne, entlang der Trajektorie 23 erkannt. Basierend auf den Daten 27 werden die jeweils erforderlichen Fahrgeschwindigkeiten 31 zum Überfahren des jeweiligen bodennahen Hindernisses 30 mittels der Recheneinrichtung 15 ermittelt. Während des eigentlichen Einparkens, das heißt dem Befahren der Trajektorie 23 in Kombination mit dem Überfahren der erkannten bodennahen Hindernisse 30, das heißt dem Bewegen des Kraftfahrzeugs 10 von der Startposition 19 zur Zielposition 19`, und dem Abstellen des Kraftfahrzeugs 10 an der Zielposition 19' auf den Stellplatz 11, erfolgt zumindest die Längsregelung automatisch mittels der Steuervorrichtung 17. Vor dem Erreichen des jeweiligen bodennahen Hindernisses 30 wird beim Unterschreiten des Mindestabstands zwischen dem Kraftfahrzeug 10 und dem jeweiligen bodennahen Hindernis 30 die jeweils erforderliche Fahrgeschwindigkeit 31 eingestellt. Nach dem Überfahren des jeweiligen bodennahen Hindernisses 30 wird die eingestellte Fahrgeschwindigkeit 31 wieder auf das Geschwindigkeitsprofil 20 zurückgesetzt.

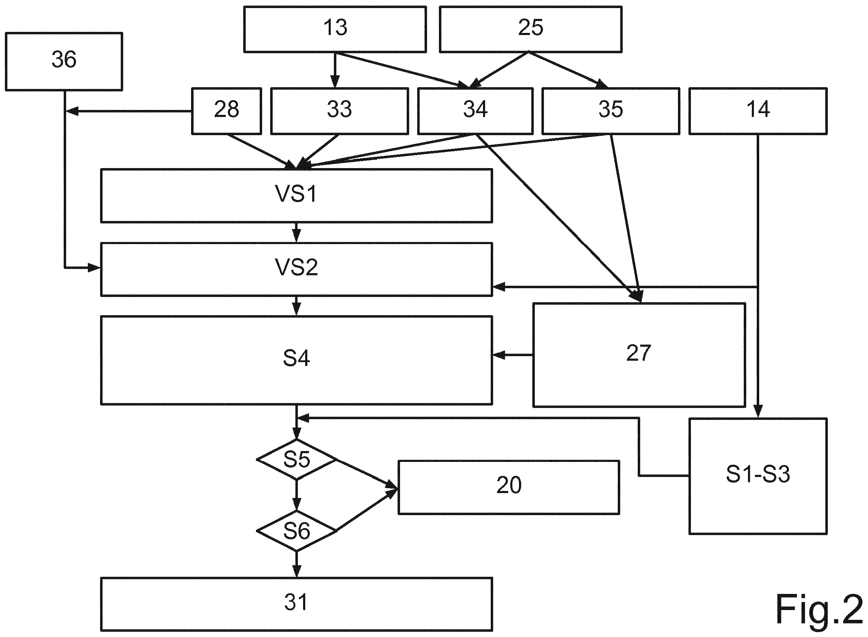

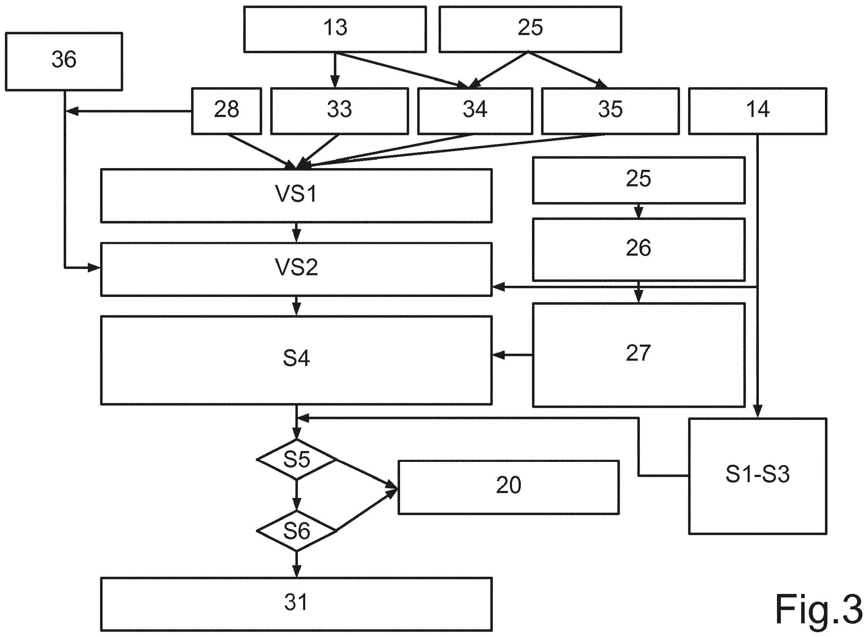

In Fig. 2 und Fig. 3 ist das Verfahren zum wenigstens teilautomatisierten Einparken des Kraftfahrzeugs 10 auf den Stellplatz 11 schematisch skizziert, welches mittels der fahrzeugseitigen Steuervorrichtung 17 durchgeführt wird. Beide Darstellungen zeigen ähnliche Verfahrensabläufe und unterscheiden sich lediglich im Verfahrensschritt S4, in welchem auf unterschiedliche Datenquellen zurückgegriffen wird. Um das Verfahren in der als mehrgeschossiges Parkhaus 12 ausgebildeten Parkinfrastruktur ausführen zu können, werden fakultativ vorbereitende Verfahrensschritte VS1 und VS2 durchgeführt, welche für eine Durchführung des Verfahrens in diesem konkreten Anwendungsfall erforderlich sind.

In einem vorbereitenden Verfahrensschritt VS1 wird ermittelt, ob das Parkhaus 12 befahren wird. Hierfür werden diverse Ortsinformationen des Navigationssystems 13, der fahrzeugfremden Servereinrichtung 25 und des globalen Navigationssatellitensystems 28 bereitgestellt. Diese beinhalten vorliegend ein Navigationsziel 33 aus einer Zieleingabe des Fahrzeugnutzers und des Weiteren auch digitale Kartendaten 34 und Sonderzieldaten 35 aus Datenbanken des Navigationssystems 13 und der fahrzeugfremden Servereinrichtung 25, wobei die fahrzeugfremde Servereinrichtung 25 insbesondere Bestandteil der Parkinfrastruktur sein kann Des Weiteren werden mittels der fahrzeugseitigen Empfangseinrichtung 29 Positionsdaten vom globalen Navigationssatellitensystem 28 empfangen.

In einem weiteren vorbereitenden Verfahrensschritt VS2 wird eine aktuelle Parkhausebene 32, auf welcher sich der Stellplatz 11 befindet, ermittelt. Hierfür werden Fahrzeugbewegungsdaten 36, welche mit Positionsdaten des globalen Navigationssatelliten 28 kombiniert werden, und Werte aus anderen Messungen der fahrzeugseitigen Sensoreinrichtung 14 herangezogen. Des Weiteren kann eine Erfassung von spezifischen Parkinfrastrukturelementen, wie Ticketautomaten, Schranken oder Rampen, mittels der fahrzeugseitigen Sensoreinrichtung 14 Aufschluss über die jeweilige Parkhausebene 32 geben. Die Erfassung von spezifischen Parkinfrastrukturelementen ist grafisch nicht abgebildet.

In den Verfahrensschritten S1-S3 wird der Stellplatz 11, die Trajektorie 23 zum Erreichen des Stellplatzes 11 und das Geschwindigkeitsprofil 20 zum Befahren der Trajektorie 23 ermittelt. Hierbei werden die von der fahrzeugseitigen Sensoreinrichtung 14, beispielsweise mittels Ultraschallsensoren, erfassten Informationen zur Fahrzeugumgebung 18 mittels der Recheneinrichtung 15 ausgewertet.

In einem nächsten Verfahrensschritt S4 werden Daten 27, welche Fahrbahnunebenheiten zumindest entlang der Trajektorie 23 charakterisieren, mittels der Recheneinrichtung 15 ausgewertet. In Fig. 2 stammen die Daten 27 von digitalen Kartendaten 34 und Sonderzieldaten 35 der Datenbanken des Navigationssystems 13 und der fahrzeugfremden Servereinrichtung 25. In Fig. 3 hingegen stammen die Daten 27 ausschließlich von der dem Parkhaus 12 zugeordneten fahrzeugfremden Servereinrichtung 25, welche über die Kommunikationsverbindung 26 die Daten 27 übermittelt.

Wird im nächsten Verfahrensschritt S5 bei einem Abgleich der Trajektorie 23 und der die Fahrbahnunebenheiten charakterisierenden Daten 27 das bodennahe Hindernis 30 auf der Trajektorie 23 erkannt, wird im Verfahrensschritt S6 überprüft, ob das vorgegebene Geschwindigkeitsprofil 20 dazu geeignet ist, das bodennahe Hindernis 30 zu überfahren. Wird insbesondere die Überwindung des Fahrwiderstandes gewünscht, dann wird überprüft, ob das Geschwindigkeitsprofil 20 zum Überfahren des bodennahen Hindernisses 30 ausreicht. Hierfür werden insbesondere Parameter des bodennahen Hindernisses 30, wie die Ausrichtung in Relation zur Trajektorie 23, die geometrische Form und deren Abmessungen und die Oberflächenbeschaffenheit herangezogen. Ist die erforderliche Fahrgeschwindigkeit 31 höher als das vorgegebene Geschwindigkeitsprofil 20, wird die erforderliche Fahrgeschwindigkeit 31 eingestellt.

Wird hingegen im Verfahrensschritt S5 kein bodennahes Hindernis 30 erkannt beziehungsweise ist trotz erkanntem bodennahen Hindernis 30 das Geschwindigkeitsprofil 20 zum Überfahren des bodennahen Hindernisses 30 geeignet, wie in Verfahrensschritt S6 überprüft wird, dann erfolgt keine Anpassung der Längsregelung. Die Trajektorie 23 und das erkannte bodennahe Hindernis 30 werden mit dem Geschwindigkeitsprofil 20 befahren beziehungsweise überfahren.

Insgesamt zeigt das Beispiel, wie mit dem Verfahren das wenigstens teilautomatisierten Einparken des Kraftfahrzeugs 10 auf den Stellplatz 11 umsetzbar ist, wenn das Kraftfahrzeug 10 beim Befahren entlang der Trajektorie 23 zum Stellplatz 11 mit dem Geschwindigkeitsprofil 20 betrieben wird und, falls sich auf der Trajektorie 23 das wenigstens eine bodennahe Hindernis 30 befindet, die erforderliche Fahrgeschwindigkeit 31 zum Überfahren des wenigstens einen bodennahen Hindernisses 30 eingestellt wird. Die erforderlichen Daten 27 können hierbei von unterschiedlichen Datenquellen zur Verfügung gestellt werden.

Analog kann auch ein Ausparkvorgang des Kraftfahrzeugs 10 durchgeführt werden, wobei das Kraftfahrzeug 10 vom Stellplatz 11 ausgeparkt von der Startposition 19 am Stellpatz 11 zu der von der Startposition 19 unterschiedlichen Zielposition 19` bewegt wird.

### Bezugszeichenliste

- 10: Kraftfahrzeug
- 10': Fahrzeug
- 11: Stellplatz
- 11': Stellplatz
- 12: Parkhaus
- 13: Navigationssystem
- 14: Sensoreinrichtung
- 15: Recheneinrichtung
- 16: Kommunikationseinrichtung
- 17: Steuervorrichtung
- 18: Fahrzeugumgebung
- 19: Startposition
- 19': Zielposition
- 20: Geschwindigkeitsprofil
- 21: befahrbare Fläche
- 22: Hindernis
- 23: Trajektorie
- 24: Kommunikationseinrichtung
- 25: Servereinrichtung
- 26: Kommunikationsverbindung
- 27: Daten
- 28: globales Navigationssatellitensystem
- 29: Empfangseinrichtung
- 30: Hindernis
- 31: Fahrgeschwindigkeit
- 32: Parkhausebene
- 33: Navigationsziel
- 34: Kartendaten
- 35: Sonderzieldaten
- 36: Fahrzeugbewegungsdaten
- VS1: Verfahrensschritt
- VS2: Verfahrensschritt
- S1-S3: Verfahrensschritte
- S4: Verfahrensschritt
- S5: Verfahrensschritt
- S6: Verfahrensschritt

## Patentansprüche

1. Verfahren zum wenigstens teilautomatisierten Steuern eines Kraftfahrzeugs (10) während eines Einpark- oder Ausparkvorgangs, umfassend folgende Schritte:
- Ermitteln einer Zielposition (19`) für den Einpark- oder Ausparkvorgang;
- Ermitteln einer Trajektorie (23) zum Erreichen der Zielposition (19`) ausgehend von einer Startposition (19) des Kraftfahrzeugs (10);
- Bereitstellen von Daten (27), welche Fahrbahnunebenheiten zumindest entlang der Trajektorie (23) charakterisieren;
- falls anhand der bereitgestellten Daten (27) wenigstens ein bodennahes Hindernis (30) entlang der Trajektorie (23) erkannt wird: Ermitteln von wenigstens einem Längsregelungsparameter des Kraftfahrzeugs (10) zum Überfahren des wenigstens einen bodennahen Hindernisses (30);
- wenigstens teilautomatisiertes Bewegen des Kraftfahrzeugs (10) bis zum Erreichen der Zielposition (19`) entlang der ermittelten Trajektorie (23), indem zumindest eine Längsregelung des Kraftfahrzeugs (10) unter Berücksichtigung des wenigstens einen ermittelten Längsregelungsparameters automatisch erfolgt,
wobei der wenigstens eine Längsregelungsparameter eingestellt wird, wenn ein Mindestabstand zwischen dem wenigstens einen bodennahen Hindernis (30) und dem Kraftfahrzeug (10) beim Befahren der Trajektorie (23) mit dem Kraftfahrzeug (10) unterschritten wird,
**dadurch gekennzeichnet, dass**
zudem noch eine Querregelung des Kraftfahrzeugs (10) bis zum Erreichen der Zielposition (19) automatisch erfolgt, und
das wenigstens eine bodennahe Hindernis jeweils eine längliche Bodenschwelle ist und
zumindest ein das bodennahe Hindernis (30) charakterisierender Parameter bereitgestellt und der wenigstens eine Längsregelungsparameter unter Berücksichtigung dieses charakteristischen Parameters ermittelt wird, wobei
der zumindest eine charakteristische Parameter eine Ausrichtung des wenigstens einen bodennahen Hindernisses (30) in Relation zur Trajektorie (23) umfasst, und
die längliche Bodenschwelle schräg gequert wird.

2. Verfahren nach Anspruch 1,
**dadurch gekennzeichnet, dass**
ein Geschwindigkeitsprofil (20) vorgegeben wird, gemäß welchem das Kraftfahrzeug (10) die ermittelte Trajektorie (23) befahren soll, wobei das wenigstens teilautomatisierte Bewegen entlang der Trajektorie (23) zumindest außerhalb vom bodennahen Hindernis (30) unter Einhaltung des Geschwindigkeitsprofils (20) erfolgt.

3. Verfahren nach einem der vorhergehenden Ansprüche,
**dadurch gekennzeichnet, dass**
das Kraftfahrzeug (10), falls der Einparkvorgang durchgeführt wird, von der Startposition (19) zur Zielposition (19`) bewegt und auf einem Stellplatz (11) an der Zielposition (19`) eingeparkt und, falls der Ausparkvorgang durchgeführt wird, vom Stellplatz (11) ausgeparkt und von der Startposition (19) am Stellplatz (11) zu der von der Startposition (19) unterschiedlichen Zielposition (19`) bewegt wird.

4. Verfahren nach einem der vorherigen Ansprüche,
**dadurch gekennzeichnet, dass**
falls die Startposition (19) und/oder die Zielposition (19`) innerhalb einer Parkinfrastruktur angeordnet sind, vor dem Ermitteln der Trajektorie (23) für die Startposition (19) und/oder die Zielposition (19`) eine jeweilige Parkinfrastrukturebene der Parkinfrastruktur ermittelt wird.

5. Verfahren nach einem der vorherigen Ansprüche,
**dadurch gekennzeichnet, dass**
es sich bei dem wenigstens einen Längsregelungsparameter um
- eine Motorleistung oder
- ein Motormoment oder
- eine Motordrehzahl oder
- eine Fahrzeuggeschwindigkeit (31) oder
- eine Fahrzeugbeschleunigung
handelt.

6. Verfahren nach einem der vorherigen Ansprüche,
**dadurch gekennzeichnet, dass**
die Trajektorie (23) in Abhängigkeit von den Fahrbahnunebenheiten und insbesondere dem wenigstens einen bodennahen Hindernis (30) ermittelt wird.

7. Verfahren nach einem der vorherigen Ansprüche,
**dadurch gekennzeichnet, dass**
vor einem Erreichen des wenigstens einen bodennahen Hindernisses (30) der wenigstens eine Längsregelungsparameter eingestellt wird und nach dem Überfahren des wenigstens einen bodennahen Hindernisses (30) eine Einstellung des wenigstens einen Längsregelungsparameters zurückgesetzt wird.

8. Verfahren nach Anspruch 7,
**dadurch gekennzeichnet, dass**
der wenigstens eine charakteristische Parameter zumindest eine der folgenden Informationen umfasst:
- eine geometrische Form des wenigstens einen bodennahen Hindernisses (30);
- mindestens ein geometrisches Maß des wenigstens einen bodennahen Hindernisses (30);
- eine Oberflächenbeschaffenheit des wenigstens einen bodennahen Hindernisses (30).

9. Verfahren nach einem der vorherigen Ansprüche,
**dadurch gekennzeichnet, dass**
jene die Fahrbahnunebenheiten charakterisierenden Daten (27) von zumindest einer Datenquelle bereitgestellt werden, wobei die Datenquelle
- zumindest eine mittels einer Kommunikationsverbindung (26) mit dem Kraftfahrzeug (10) verbundene fahrzeugfremde Servereinrichtung (25) und/oder
- ein Navigationssystem (13) des Kraftfahrzeugs (10) und/oder
- eine fahrzeugseitige Sensoreinrichtung (14)
ist.

10. Verfahren nach Anspruch 9,
**dadurch gekennzeichnet, dass**
die zumindest eine fahrzeugfremde Servereinrichtung Bestandteil einer Parkinfrastruktur ist.

11. Verfahren nach einem der vorherigen Ansprüche,
**dadurch gekennzeichnet, dass**
das Kraftfahrzeug (10) auf Basis von zumindest einer der folgenden Ortsinformationen lokalisiert wird:
- digitale Kartendaten;
- Sensordaten des Kraftfahrzeugs (10);
- eine Zieleingabe eines Fahrzeugnutzers.

12. Steuervorrichtung (17) für ein Kraftfahrzeug (10), ausgebildet zum wenigstens teilautomatisierten Steuern des Kraftfahrzeugs (10) während eines Einpark- oder Ausparkvorgangs gemäß einem Verfahren nach einem der vorherigen Ansprüche, indem die Steuervorrichtung (17) Mittel zur Durchführung der Verfahrensschritte umfasst.

13. Kraftfahrzeug (10) mit einer Steuervorrichtung (17) nach Anspruch 12.

## Claims

1. Method for at least partially automated open-loop control of a motor vehicle (10) during a parking maneuver or exiting maneuver, comprising the following steps:
- determining a target position (19') for the parking maneuver or exiting maneuver;
- determining a trajectory (23) for reaching the target position (19') starting from a starting position (19) of the motor vehicle (10);
- providing data (27) which characterize road unevenness at least along the trajectory (23);
- if on the basis of the data (27) at least one near-ground obstacle (30) along the trajectory (23) is detected: determining at least one longitudinal closed-loop control parameter of the motor vehicle (10) for driving over the at least one near-ground obstacle (30);
- at least partially automated movement of the motor vehicle (10) along the determined trajectory (23) until the target position (19') is reached, in that at least one longitudinal closed-loop control process of the motor vehicle (10), taking into account the at least one determined longitudinal closed-loop control parameter, takes place automatically,
the at least one longitudinal closed-loop control parameter being set when a minimum distance between the at least one near-ground obstacle (30) and the motor vehicle (10) is exceeded during travel along the trajectory (23) with the motor vehicle (10),
**characterized in that**
in addition, transverse closed-loop control of the motor vehicle (10) takes place automatically until the target position (19) is reached, and
the at least one near-ground obstacle is in each case an elongate speed bump
and
at least one parameter characterizing the near-ground obstacle (30) is provided, and the at least one longitudinal closed-loop control parameter is determined taking said characteristic parameter into account,
the at least one characteristic parameter comprising an alignment of the at least one ground-level obstacle (30) in relation to the trajectory (23), and the elongate speed bump being crossed obliquely.

2. Method according to claim 1,
**characterized in that**
a speed profile (20) is predetermined, according to which the motor vehicle (10) is to travel along the determined trajectory (23), the at least partially automated movement taking place along the trajectory (23) at least outside of the near-ground obstacle (30) while maintaining the speed profile (20).

3. Method according to any of the preceding claims,
**characterized in that**
the motor vehicle (10), if the parking maneuver is carried out, moves from the starting position (19) to the target position (19') and parks at a parking space (11) at the target position (19'), and, if the exiting maneuver is carried out, is moved out of the parking space (11) and moved from the starting position (19) in the parking space (11) to the target position (19'), which is different from the starting position (19).

4. Method according to any of the preceding claims,
**characterized in that**
if the starting position (19) and/or the target position (19') are arranged within a parking infrastructure, a relevant parking infrastructure level of the parking infrastructure is determined before determining the trajectory (23) for the starting position (19) and/or the target position (19').

5. Method according to any of the preceding claims,
**characterized in that**
the at least one longitudinal closed-loop control parameter is
- an engine performance or
- an engine torque or
- an engine speed or
- a vehicle speed (31) or
- a vehicle acceleration.

6. Method according to any of the preceding claims,
**characterized in that**
the trajectory (23) is determined depending on the road unevenness and in particular the at least one near-ground obstacle (30).

7. Method according to any of the preceding claims,
**characterized in that**
before reaching the at least one near-ground obstacle (30), the at least one longitudinal closed-loop control parameter is set and, after driving over the at least one ground-level obstacle (30), a setting of the at least one longitudinal closed-loop control parameter is reset.

8. Method according to claim 7,
**characterized in that**
the at least one characteristic parameter comprises at least one of the following pieces of information:
- a geometric shape of the at least one near-ground obstacle (30);
- at least one geometric measurement of the at least one ground-level obstacle (30);
- a surface condition of the at least one near-ground obstacle (30).

9. Method according to any of the preceding claims,
**characterized in that**
those data (27) characterizing the road unevenness are provided by at least one data source, the data source being
- at least one vehicle-external server device (25) connected to the motor vehicle (10) by means of a communication link (26), and/or
- a navigation system (13) of the motor vehicle (10) and/or
- an onboard sensor device (14).

10. Method according to claim 9,
**characterized in that**
the at least one vehicle-external server device is a component of a parking infrastructure.

11. Method according to any of the preceding claims,
**characterized in that**
the motor vehicle (10) is located on the basis of at least one of the following pieces of location information:
- digital map data;
- sensor data of the motor vehicle (10);
- a destination input of a vehicle user.

12. Open-loop control device (17) for a motor vehicle (10), designed for at least partially automated open-loop control of the motor vehicle (10) during a parking maneuver or exiting maneuver according to a method according to any of the preceding claims, by the open-loop control device (17) comprising a means for carrying out the steps of the method.

13. Motor vehicle (10) having an open-loop control device (17) according to claim 12.

## Revendications

1. Procédé permettant la commande au moins partiellement automatisée d'un véhicule automobile (10) pendant un processus de stationnement ou de sortie de stationnement, comprenant les étapes suivantes :
- détermination d'une position cible (19`) pour le processus de stationnement ou de sortie de stationnement ;
- détermination d'une trajectoire (23) permettant d'atteindre la position cible (19`) à partir d'une position de départ (19) du véhicule automobile (10) ;
- fourniture de données (27) qui caractérisent des irrégularités de la chaussée au moins le long de la trajectoire (23) ;
- si, à l'aide des données (27) fournies, au moins un obstacle proche du sol (30) est détecté le long de la trajectoire (23) : détermination d'au moins un paramètre de réglage longitudinal du véhicule automobile (10) pour le franchissement de l'au moins un obstacle proche du sol (30) ;
- déplacement au moins partiellement automatisé du véhicule automobile (10) jusqu'à ce que la position cible (19`) soit atteinte le long de la trajectoire (23) déterminée en effectuant automatiquement au moins un réglage longitudinal du véhicule automobile (10) en tenant compte de l'au moins un paramètre de réglage longitudinal déterminé,
dans lequel l'au moins un paramètre de réglage longitudinal est ajusté lorsqu'une distance minimale entre l'au moins un obstacle proche du sol (30) et le véhicule automobile (10) n'est pas atteinte lorsque le véhicule automobile (10) parcourt la trajectoire (23),
**caractérisé en ce que**
en outre, un réglage transversal du véhicule automobile (10) est effectué automatiquement jusqu'à ce que la position cible (19) soit atteinte, et
l'au moins un obstacle proche du sol est respectivement un ralentisseur allongé
et
au moins un paramètre caractérisant l'obstacle proche du sol (30) est fourni et l'au moins un paramètre de réglage longitudinal est déterminé en tenant compte dudit paramètre caractéristique, dans lequel
l'au moins un paramètre caractéristique comprend une orientation de l'au moins un obstacle proche du sol (30) par rapport à la trajectoire (23), et le ralentisseur allongé est traversé obliquement.

2. Procédé selon la revendication 1,
**caractérisé en ce que**
un profil de vitesse (20) est préfini, conformément auquel le véhicule automobile (10) doit parcourir la trajectoire (23) déterminée, dans lequel le déplacement au moins partiellement automatisé le long de la trajectoire (23) est effectué au moins à l'écart de l'obstacle proche du sol (30) en respectant le profil de vitesse (20).

3. Procédé selon l'une des revendications précédentes,
**caractérisé en ce que**
si le processus de stationnement est réalisé, le véhicule automobile (10) est déplacé de la position de départ (19) à la position cible (19`) et est stationné sur un emplacement de stationnement (11) à la position cible (19`) et, si le processus de sortie de stationnement est réalisé, il est sorti de l'emplacement de stationnement (11) et déplacé de la position de départ (19) au niveau de l'emplacement de stationnement (11) jusqu'à la position cible (19`) différente de la position de départ (19).

4. Procédé selon l'une des revendications précédentes,
**caractérisé en ce que**
si la position de départ (19) et/ou la position cible (19`) sont disposées à l'intérieur d'une infrastructure de stationnement, un plan d'infrastructure de stationnement respectif de l'infrastructure de stationnement est déterminé avant la détermination de la trajectoire (23) pour la position de départ (19) et/ou la position cible (19`).

5. Procédé selon l'une des revendications précédentes,
**caractérisé en ce que**
l'au moins un paramètre de réglage longitudinal est
- une puissance de moteur ou
- un couple de moteur ou
- un régime moteur ou
- une vitesse de véhicule (31) ou
- une accélération de véhicule.

6. Procédé selon l'une des revendications précédentes,
**caractérisé en ce que**
la trajectoire (23) est déterminée en fonction des irrégularités de la chaussée et en particulier de l'au moins un obstacle proche du sol (30).

7. Procédé selon l'une des revendications précédentes,
**caractérisé en ce que**
avant l'atteinte de l'au moins un obstacle proche du sol (30), l'au moins un paramètre de réglage longitudinal est ajusté et, après le franchissement de l'au moins un obstacle proche du sol (30), un ajustement de l'au moins un paramètre de réglage longitudinal est réinitialisé.

8. Procédé selon la revendication 7,
**caractérisé en ce que**
l'au moins un paramètre caractéristique comprend au moins l'une des informations suivantes :
- une forme géométrique de l'au moins un obstacle proche du sol (30) ;
- au moins une dimension géométrique de l'au moins un obstacle proche du sol (30) ;
- une texture de surface de l'au moins un obstacle proche du sol (30).

9. Procédé selon l'une des revendications précédentes,
**caractérisé en ce que**
lesdites données (27) caractérisant les irrégularités de la chaussée sont fournies par au moins une source de données, dans lequel la source de données est
- au moins un appareil serveur (25) indépendant du véhicule et connecté au véhicule automobile (10) au moyen d'une connexion de communication (26) et/ou
- un système de navigation (13) du véhicule automobile (10) et/ou
- un appareil formant capteur (14) côté véhicule.

10. Procédé selon la revendication 9,
**caractérisé en ce que**
l'au moins un appareil serveur indépendant du véhicule fait partie d'une infrastructure de stationnement.

11. Procédé selon l'une des revendications précédentes,
**caractérisé en ce que**
le véhicule automobile (10) est localisé sur la base d'au moins l'une des informations d'emplacement suivantes :
- données cartographiques numériques ;
- données de capteur du véhicule automobile (10) ;
- une entrée de destination d'un utilisateur de véhicule.

12. Dispositif de commande (17) pour un véhicule automobile (10), configuré pour la commande au moins partiellement automatisée du véhicule automobile (10) pendant un processus de stationnement ou de sortie de stationnement conformément à un procédé selon l'une des revendications précédentes par le fait que le dispositif de commande (17) comprend des moyens permettant la réalisation des étapes de procédé.

13. Véhicule automobile (10) comportant un dispositif de commande (17) selon la revendication 12.
